# FASCICULE DE BREVET EUROPEEN

(11) **EP 0 749 695 B1**
(45) Date de publication et mention de la délivrance du brevet: **17.10.2001**
(21) Numéro de dépôt: 96201615.0
(22) Date de dépôt: 10.06.1996
(51) Int. Cl.: A23K 1/00, A23K 1/18

(54) **Aliment sec pour animal familier, son procédé d'obtention et dispositif pour la mise en oeuvre du procédé**
Trockenfutter für Haustiere, Verfahren und Vorrichtung zur Herstellung desselben
Dry fodder for pet animals, process and apparatus for its manufacturing

(30) Priorité: 20.06.1995 EP 95201666
(43) Date de publication de la demande: 27.12.1996
(73) Titulaire: SOCIETE DES PRODUITS NESTLE S.A., 1800 Vevey (CH)
(72) Inventeur: Janot, Denis, 80800 Fouilloy (FR); Martin, Thierry, 80000 Amiens (FR); Toppano, Marco, 77400 Lagny sur Marne (FR)
(74) Mandataire: Thomas, Alain

(56) Documents cités:
- EP-A- 0 265 740
- FR-A- 2 274 235
- PATENT ABSTRACTS OF JAPAN vol. 11, no. 63 (C-406), 26 Février 1987 & JP-A-61 224941 (SHOKUHIN SANGYO EREKUTORUUJOHN KUTSUKINGU GIJUTSU KENKYU KUMIAI), 6 Octobre 1986,

## Description

L'invention concerne un aliment sec pour animal familier, ainsi que son procédé d'obtention et le dispositif pour la mise en oeuvre de ce procédé.

Traditionnellement, les aliments secs pour animaux familiers sont produits par extrusion (les croquettes). Ces produits sont expansés et ne ressemblent pas à de la viande. D'autres techniques d'extrusion et de filage sont bien connues et utilisées dans la technique. Les produits ainsi obtenus sont bien des analogues de viandes humides ou séchées, mais ces technologies nécessitent des formules avec des taux de protéines importants pour texturer la matière (taux supérieurs à 40%).

Le brevet FR 227 42 35 concerne un aliment sec présentant une texture et un aspect tendre et mou et comprenant un mélange de matières grasses, d'adhésif protéinés et d'un agent plastifiant en limitant les ingrédients amylacés à 25%, mais la texture n'est pas lamellaire et croustillante et les formules sont spécifiques. Le brevet JP 6122 49 41 concerne des produits texturés, de hautes densités avec des taux de protéines supérieurs à 40% fabriqués uniquement sur des extrudeurs bivis.

Le but de la présente invention est la mise au point d'un analogue de viande séchée à partir d'une formule traditionnelle pour animaux familiers, c'est-à-dire contenant moins de 40% de protéines, ne nécessitant aucun ajout d'adhésif protéinés, d'agent plastifiant ou de sucres et ayant une texture croustillante.

L'invention concerne un aliment sec pour animal domestique, obtenu à partir d'un extrudeur. L'extrudeur qui sera décrit plus précisément ci-dessous est un système avec une ou deux vis à pas variable ou constant logée dans un fourreau et qui travaille sous pression et à température élevée.

L'invention concerne donc un aliment sec pour animal domestique qui a une structure lamellaire qui a une teneur en humidité comprise entre 2 et 15%, une teneur en protéines comprise entre 14 et 35%, une teneur en glucides d'au moins 25% et une teneur en lipide comprise entre 2 et 20% et qui a une densité comprise entre 0,3 et 0,6 et ne comportant aucun ajout d'adhésif protéinés, d'agent plastifiant ou de sucres.

La structure lamellaire est sous forme de couches ayant chacune une épaisseur comprise entre 1 et 6 mm. La teneur en glucides est comprise entre 25 et 70%.

Le produit selon l'invention est obtenu par un mélange classique de céréales, d'extraits de protéines végétales, de. farines animales et de sous-produits végétaux. Normalement, la teneur en céréales est comprise entre 40 et 70%, celle de protéines végétales entre 5 et 25%, celle de farines animales entre 5 et 30% et celle de sous-produits végétaux entre 10 et 20%. Par céréales, on entend, toutes les espèces de céréales quelle que soit leur présentation ou les produits obtenus par la transformation de l'amande farineuse des céréales. Par extraits de protéines végétales, on entend, tous les produits d'origine végétale, dont les protéines ont été concentrées par un traitement approprié, qui contiennent au moins 50% de protéine brute par rapport à la matière sèche et qui peuvent avoir été restructurées. Par farines animales, on entend, tous les produits et sous-produits provenant de la transformation des animaux ou des parties d'animaux.

Par sous-produits végétaux, on entend des sous-produits provenant du traitement des produits végétaux, en particulier des céréales, des légumes, des légumineuses et des graines oléagineuses.

On a constaté que le produit selon l'invention a une appétence équivalente, voire même meilleure que celle des aliments secs obtenus par la voie classique, c'est-à-dire par cuisson-extrusion.

L'aliment sec est prévu aussi bien pour les chats que pour les chiens. De préférence, cet aliment est prévu pour les chiens; il contient entre 18 et 35% de protéines et a une teneur en humidité comprise entre 8 et 12%. Il se présente sous forme de morceaux à texture lamellaire ayant des grandeurs dans les trois dimensions comprises entre 5 et 40 mm. Les morceaux ont un poids compris entre 0,5 et 25 g.

L'invention concerne également le procédé d'obtention de l'aliment sec décrit ci-dessus, dans lequel on mélange les ingrédients de base, tels que mentionnés ci-dessus, on cuit ledit mélange dans l'extrudeur, on sort le produit de l'extrudeur sous forme d'une bande ou de lanières que l'on découpe à la taille souhaitée et on sèche les morceaux pour arriver à une teneur en humidité comprise entre 4 et 15%. Après le mélange des ingrédients de base, on peut effectuer un préconditionnement pour arriver à une teneur en humidité comprise entre 15 et 25%.

Avant de mélanger les différents ingrédients, on les broie à la taille souhaitée. Le mélange ainsi obtenu a une teneur en humidité de l'ordre de 10%. On introduit ensuite le mélange dans une trémie d'alimentation, comportant une vis doseuse utilisée pour régler le débit du procédé.

On préconditionne éventuellement alors le mélange servi par la vis doseuse avec de l'eau et de la vapeur. Le préconditionneur est une enceinte équipée d'un ou plusieurs axes avec des pales. L'objectif du préconditionneur est d'humidifier le mélange initialement à environ 10% pour arriver à une humidité de 13 à 20%. Un autre objectif du préconditionneur est de préchauffer le mélange à l'aide de l'énergie apportée par la vapeur. La rotation des axes provoque un mélange intense entre le mélange, l'eau et la vapeur. Le temps de séjour dans le préconditionneur est compris entre 20 et 200 secondes. A la sortie du préconditionneur, le mélange tombe dans l'extrudeur.

On cuit dans ledit extrudeur. L'extrudeur est constitué d'une ou deux vis logée dans un fourreau. La ou les vis sont entraînées en rotation par un moteur. La configuration de la vis est variable ou constante et dépend du résultat recherché. A l'entrée de l'extrudeur le pas de la vis est assez grand pour permettre une bonne alimentation dudit extrudeur, ensuite le pas se resserre pour créer les frictions nécessaires au mélange et au cisaillement du mélange. La vis peut être constituée de simple ou double filet selon le taux de remplissage et les frictions souhaitées. On peut aussi envisager d'injecter de la vapeur dans l'extrudeur, de manière à accroître la cuisson du mélange. Le mélange devient pâteux et est acheminé vers la sortie de l'extrudeur pour être mis en forme. La sortie de l'extrudeur est constituée d'une filière, dont les dimensions et les formes vont permettre au mélange pâteux de prendre la forme et l'aspect caractéristique du produit, selon l'invention. Pour permettre au produit de se former, la filière annulaire ou plate est actionnée hydrauliquement. L'ouverture réglable permet de créer la pression nécessaire de 10 à 50bar pour former le produit. Au niveau de cette filière, la température du mélange pâteux est d'environ 80 à 140°C. On peut aussi envisager l'utilisation d'une filière sans ouverture réglable, c'est-à-dire à ouverture fixe. Dans ce cas, l'épaisseur de la bande est déterminée par la géométrie de la filière.

L'humidité du produit sortie extrudeur est d'environ 12 à 20%. En sortie de la filière, le produit sort en bandes et a déjà un aspect de viande séchée.

L'extrudeur utilisé est de préférence un extrudeur monovis, mais il peut être remplacé par un extrudeur bivis ou un expandeur. Un expandeur a une vis d'Archimède simple, en général de pas constant et sans zone de striction. Les extrudeurs monovis ont des profils de vis plus complexes et sont capables de générer plus de friction et de pression.

De l'extrudeur on peut extraire une bande qui sera alors découpée dans une cubeuse, par exemple du type Urschel. On peut aussi extraire plusieurs bandes générées par des couteaux fixes disposés à l'intérieur ou en sortie de la filière. Ces couteaux peuvent être verticaux et/ou horizontaux. Ces bandes seront ensuite découpées par un couteau rotatif.Ces opérations ont pour but de transformer les bandes de produit en morceaux de dimensions recherchées qui varient de 5 sur 5 mm à 40 sur 40 mm.

On sèche finalement les morceaux pour obtenir une humidité totale de 2 à 15%. Ce séchage a pour but de favoriser la conservation du produit. Le système de séchage utilisé est traditionnellement du type à tablier. Les morceaux à sécher sont étalés sur la bande de transport au moyen d'un système adéquat qui peut être une bande oscillante, une vis d'étalement ou un distributeur vibrant. La bande traverse un tunnel composé de cellules ayant chacune leur propre dispositif de chauffage et de ventilation. Le séchage s'effectue par traversée de haut en bas ou de bas en haut, ou une combinaison des deux systèmes afin d'obtenir un produit parfaitement homogène.

En utilisation sec, le produit ainsi fabriqué peut être enrobé avec des hydrolysats, des graisses ou des enrobages afin d'augmenter l'appétence du produit, de lui donner une coloration ou une allégation recherchée.

En utilisation humide, le produit peut être mélangé avec de la viande broyée, mis en boîte et stérilisé. Durant le phase de stérilisation, le produit absorbe de l'eau et garde sa structure lamellaire et son aspect viande. Le produit peut également être incorporé dans des produits du type semi- conserve, d'aliments stabilisés ou d'aliments réfrigérés.

Le produit peut être coloré avec des colorants alimentaires. Les colorants peuvent être introduits à sec dans la base ou injectés en liquide dans l'extrudeur.

L'invention concerne finalement le dispositif pour la mise en oeuvre du procédé décrit ci-dessus. Il comprend:
- un extrudeur comprenant une ou deux vis à pas variable ou constant logées dans un fourreau,
- une filière
- un dispositif de découpe
- un système de séchage

Le dispositif peut comprendre en outre avant l'extrudeur un préconditionneur comportant un ou deux axes avec des pales.

Le dispositif de découpe est soit une cubeuse ou un système de couteaux verticaux ou horizontaux fixes couplés avec un couteau rotatif ou couteau guillotine.

La suite de la description est faite en relation avec les dessins sur lesquels:
- Fig. 1: montre une représentation schématique du dispositif selon l'invention
- Fig. 2: une représentation schématique de l'extrudeur et de la filière et
- Fig. 3: est une représentation en perspective de la filière.

On broie les matières premières et on les mélange avec les farines. On charge alors la trémie d'alimentation (1) qui approvisionne la vis doseuse (2); cette dernière détermine la vitesse du procédé. Elle alimente le préconditionneur (3): dans ce dernier, le mélange est humidifié, d'une part par addition d'eau et, d'autre part par injection de vapeur. Ce traitement sert en outre à chauffer le mélange. A la sortie du préconditionneur (3), le mélange tombe dans l'extrudeur (4). Dans ce dernier, on termine la cuisson du mélange à une température de 120°C pendant 10 à 45 sec. La vis de l'extrudeur entraînée par un moteur (7) amène la pâte vers la filière de sortie (8) et les bandes sortant de ladite filière sont découpées dans un dispositif de coupe (5). Les morceaux (9) ainsi obtenus sont alimentés dans une enceinte de séchage (6) travaillant avec de l'air chaud. On voit bien sur la figure la structure lamellaire des morceaux (9). Ceux-ci sont alors prêts, soit pour être emballés, soit pour être mélangés avec une base pour en faire un produit humide.

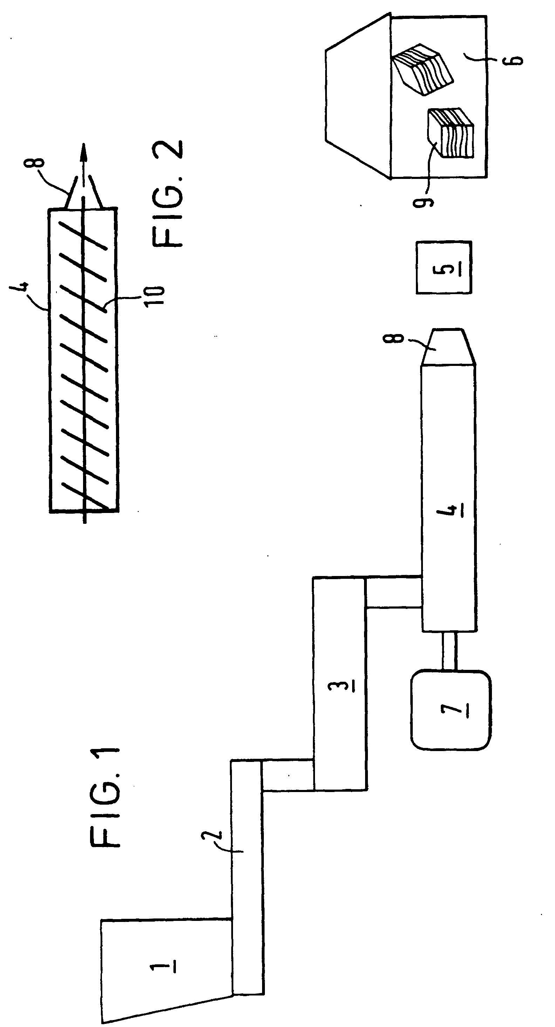

En référence à la fig. 2, le mélange est entraîné dans l'expandeur (4) avec monovis (10) jusqu'à la filière (8) à orifice fixe ayant sensiblement la forme d'un bec de canard, de manière à former une bande de largeur comprise entre 15 et 20 cm, ladite bande se déplaçant dans le sens de la flèche.

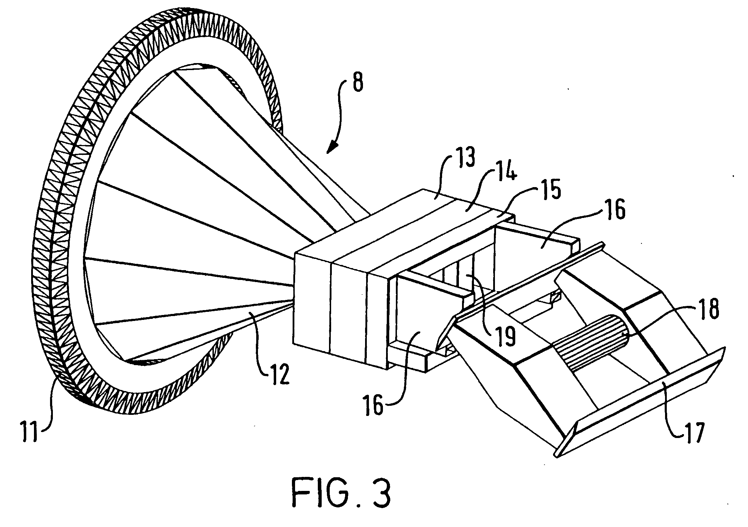

La Figure 3 représente plus précisément la filière (8) et le dispositif de découpe (5). Elle comprend une plaque filière (11) disposée en bout d'extrudeur, un cône. de formage (12), les filières de sortie (13) et (14), un cadre (15) portant des couteaux verticaux fixes (19), des guides (16) et des couteaux rotatifs (17) tournant autour de l'axe (18). Les filières de sortie (13) et (14) présentent des ouvertures rectangulaires permettant un bon formage de la bande de produit à découper. Les couteaux (19) permettent de sortir des lanières qu'on découpe ensuite sous forme de morceaux (9) avec une vitesse adéquate de rotation des couteaux (17).

La suite de la description est faite en référence aux exemples.

### Exemple 1

On prépare une composition contenant les ingrédients suivants:
- céréales 50%
- viandes et sous-produits animaux 29%
- huiles et graisses 9%
- sous-produits d'origine végétale 8%
- vitamines et minéraux 4%

Après broyage et mélange de ces ingrédients, on travaille sur la vis doseuse (2) avec un débit de 1'600 Kg/h. Dans le préconditionneur (3), on ajoute 5% d'eau et 3% de vapeur et le mélange séjourne pendant 120 sec. On termine la cuisson dans l'expandeur qui travaille à 135°C et sous une pression de 18 bar.

On sort de l'expandeur une bande uniforme de 15 mm d'épaisseur et de 200 mm de largeur, cette bande est acheminée dans une cubeuse où l'on obtient après découpe des produits à structure lamellaires de dimensions 15/15/15 mm. Ce produit est ensuite séché et enrobé pour obtenir en final une humidité de 11%, et une densité apparente de 0.38.

Le produit fini a la composition suivante:
- protéines 24%
- eau 11%
- lipides 4%
- cendres 7%
- glucides 43%
- fibres 11%

### Exemple 2

On prépare comme dans l'exemple 1 une composition contenant les ingrédients suivants:
- céréales 65%
- sous-produits d'origine végétale 24%
- viandes et sous-produits animaux 6%
- huiles et graisses 3%
- vitamines et minéraux 2%

Dans l'extrudeur travaillant à 120°C, on injecte 10% de vapeur, 15% d'eau de façon à hydrater et cuire le produit, la pâte est poussée à travers la filière où des couteaux fixes (horizontaux et verticaux) permettent la fabrication de 2 couches de 12 bandes individualisées. Ces bandes sont ensuite coupées dans un couteau rotatif pour obtenir des cubes à structure lamellaires de dimensions 25/25/25 mm. Ces cubes sont ensuite séchés et enrobés pour obtenir un produit avec une humidité de 11% et une densité de 0.45

Le produit fini a la composition suivante:
- protéines 20%
- eau 11%
- lipides 5%
- cendres 5%
- glucides 47%
- fibres 12%

### Exemple 3

On opère comme dans l'exemple 1, à la différence que les produits sont réincorporés dans des boîtes avec de la sauce pour être ensuite stérilisés. La composition étant
- céréales 14.0%
- viandes et sous-produits animaux 8.0%
- huiles et graisses 2.5%
- sous-produits d'origine végétale 2.2%
- vitamines et minéraux 1.1%
- sauce 72.2%
pour obtenir en final un produit en boîte à 80% d'humidité et à 6% de protéines.

## Revendications

1. Aliment sec pour animal domestique ,obtenu à partir d'un extrudeur, **caractérisé en ce qu'**il a une structure lamellaire, **en ce qu'**il a une teneur en humidité comprise entre 4 et 15 %, une teneur en protéines comprise entre 14 et 35 %, une teneur en glucides d'au moins 25 % et une teneur en lipide comprise entre 2 et 20 %, **en ce qu'**il a une densité comprise entre 0,3 et 0,6 et ne comportant aucun ajout d'adhésif protéines, d'agent plastifiant ou de sucres.

2. Aliment sec selon la revendication 1, **caractérisé en ce qu'**il a une teneur en protéines comprise entre 20 et 30 % et une teneur en humidité comprise entre 8 et 12 %.

3. Aliment sec selon l'une des revendications 1 ou 2, **caractérisé en ce qu'**il se présente sous forme de morceaux ayant des grandeurs dans les trois dimensions comprises entre 5 et 40 mm.

4. Procédé d'obtention de l'aliment sec selon l'une des revendications 1 à 3, **caractérisé en ce qu'**on mélange les ingrédients de base, on cuit ledit mélange dans l'extrudeur, on sort le produit de l'extrudeur sous forme d'une bande ou de lanières que l'on découpe à la taille souhaitée et on sèche les morceaux pour arriver à la teneur en humidité comprise entre 4 et 15 %.

5. Procédé selon la revendication 4, **caractérisé en ce qu'**après le mélange des ingrédients de base, on effectue un préconditionnement pour arriver à une teneur en humidité comprise entre 15 et 25 % par addition d'eau et de vapeur en une durée comprise entre 20 et 200 secondes.

6. Procédé selon l'une des revendications 4 ou 5, **caractérisé en ce que** la cuisson dans l'expandeur est effectuée à une température comprise entre 80 et 150 °C.

7. Dispositif pour la mise en oeuvre du procédé selon l'une des revendications 4 à 6, **caractérisé en ce qu'**il comprend:
- un extrudeur comprenant une ou deux vis à pas variable ou constant logée dans un fourreau,
- une filière et
- un dispositif de découpe et
- un système de séchage.

8. Dispositif selon la revendication 7, **caractérisé en ce qu'**il comprend avant l'extrudeur un préconditionneur comportant un ou deux axes avec des pales.

## Claims

1. Dry food for domestic animals, obtained from an extruder, **characterized in that** it has a lamellar structure, **in that** it has a moisture content of between 4 and 15 %, a protein content of between 14 and 35 %, a carbohydrate content of at least 25 % and a lipid content of between 2 and 20 %, **in that** it has a density of between 0.3 and 0.6 and does not contain additions of proteinaceous adhesive, plasticizing agent or sugars.

2. Dry food according to claim 1, **characterized in that** it has a protein content of between 20 and 30 % and a moisture content of between 8 and 12 %.

3. Dry food according to either of claims 1 or 2, **characterized in that** it is in the form of pieces having dimensions in the three directions of between 5 and 40 mm.

4. Process for obtaining the dry food according to one of claims 1 to 3, **characterized in that** the base ingredients are mixed, the said mixture is cooked in the extruder, the product is made to leave the extruder in the form of a strip or of laces which are cut up into the required length and the pieces are dried so as to reach a moisture content of between 4 and 15 %.

5. Process according to claim 4, **characterized in that** after mixing the base ingredients, they are preconditioned so as to arrive at a moisture content of between 15 and 25 % by the addition of water and steam over a period of between 20 and 200 seconds.

6. Process according to either of claims 4 or 5, **characterized in that** cooking in the expander is carried out at a temperature of between 80 and 150°C.

7. Device for implementing the process according to one of claims 4 to 6, **characterized in that** it comprises:
- an extruder having one or two screws with a variable or constant pitch housed in a sleeve,
- a die and
- a cutting device and
- a drying system.

8. Device according to claim 7, **characterized in that** it includes, before the extruder, a preconditioner having one or two shafts with blades.

## Patentansprüche

1. Extrudiertes trockenes Nahrungsmittel für Haustiere, **dadurch gekennzeichnet, dass** es eine Lamellenstruktur aufweist, dass es einen Feuchtigkeitsgehalt zwischen 4 und 15%, einen Gehalt an Proteinen zwischen 14 und 35%, einen Gehalt an Kohlenhydraten von mindestens 25% und einen Lipidgehalt zwischen 2 und 20 % besitzt und dass es eine Dichte zwischen 0,3 und 0,6 besitzt und keinen Zusatz von Proteinbindemittel, Weichmacher oder Zuckern enthält.

2. Trockenes Nahrungsmittel nach Anspruch 1, **dadurch gekennzeichnet, dass** es einen Gehalt an Proteinen zwischen 20 und 30% und einen Feuchtigkeitsgehalt zwischen 8 und 12% besitzt.

3. Trockenes Nahrungsmittel nach einem der Ansprüche 1 oder 2, **dadurch gekennzeichnet, dass** es in Form von Stücken mit Größen zwischen 5 und 40 mm in den drei Dimensionen vorliegt.

4. Verfahren zur Herstellung des trockenen Nahrungsmittels nach einem der Ansprüche 1 bis 3, **dadurch gekennzeichnet, dass** man die Grundzutaten mischt, die Mischung im Extruder kocht, das Produkt aus dem Extruder in Form eines Bandes oder in Form von Streifen austreten lässt, das bzw. die man auf die gewünschte Größe schneidet, und die Stücke trocknet, um einen Feuchtigkeitsgehalt zwischen 4 und 15% zu erreichen.

5. Verfahren nach Anspruch 4, **dadurch gekennzeichnet, dass** man nach dem Mischen der Grundzutaten eine Vorkonditionierung vornimmt, um durch Zugabe von Wasser und Dampf in einer Zeit zwischen 20 und 200 Sekunden einen Feuchtigkeitsgehalt zwischen 15 und 25% zu erreichen.

6. Verfahren nach einem der Ansprüche 4 oder 5, **dadurch gekennzeichnet, dass** das Kochen im Expander bei einer Temperatur zwischen 80 und 150°C durchgeführt wird.

7. Vorrichtung zur Durchführung des Verfahrens nach einem der Ansprüche 4 bis 6, **dadurch gekennzeichnet, dass** sie folgende Elemente besitzt:
- einen Extruder mit einer oder zwei in einem Rohr angeordneten Schnecken mit veränderlicher oder konstanter Steigung,
- eine Düse,
- eine Schneidvorrichtung und
- ein Trocknungssystem.

8. Vorrichtung nach Anspruch 7, **dadurch gekennzeichnet, dass** sie vor dem Extruder eine Vorkonditioniereinrichtung besitzt, die eine oder zwei Achsen mit Blättern aufweist.
